# EUROPÄISCHE PATENTSCHRIFT

(11) **EP 0 553 648 B1**
(45) Veröffentlichungstag und Bekanntmachung des Hinweises auf die Patenterteilung: **22.09.1999**
(21) Anmeldenummer: 93100463.4
(22) Anmeldetag: 14.01.1993
(51) Int. Cl.: H04L 25/49

(54) **Paralleler additiver Scrambler und Descrambler**
Parallel scrambler and descrambler
Brouilleur et désembrouilleur parallèles

(30) Priorität: 31.01.1992 DE 4202682
(43) Veröffentlichungstag der Anmeldung: 04.08.1993
(73) Patentinhaber: ALCATEL, 75008 Paris (FR)
(72) Erfinder: Wettengel, Heinz, W-7257 Ditzingen 5 (DE); Borschel, Hartmut, W-7000 Stuttgart 40 (DE)
(74) Vertreter: Schätzle, Albin, Dipl.-Phys.

(56) Entgegenhaltungen:
- EP-A- 0 301 383
- PATENT ABSTRACTS OF JAPAN vol. 15, no. 40 (E-1028)30. Januar 1991 & JP-A-2 277 329 ( FUJITSU LTD ) 13. November 1990
- PATENT ABSTRACTS OF JAPAN vol. 8, no. 268 (E-283)(1705) 7. Dezember 1984 & JP-A-59 138 138 ( MATSUSHITA DENKI SANGYO K.K. ) 8. August 1984
- PATENT ABSTRACTS OF JAPAN vol. 10, no. 69 (E-389)(2126) 18. März 1986 & JP-A-60 217 746 ( NIPPON DENKI ) 21. Oktober 1985
- PATENT ABSTRACTS OF JAPAN vol. 14, no. 225 (E-0927)14. Mai 1990 & JP-A-2 058 416 ( MITSUI MINING AND SMELTING CO LTD ) 27. Februar 1990

## Beschreibung

Die Erfindung betrifft einen parallelen additiven Scrambler gemäß dem Oberbegriff der Ansprüche 1 und 9 und einen parallelen additiven Descrambler gemäß dem Oberbegriff der Ansprüche 10 und 11.

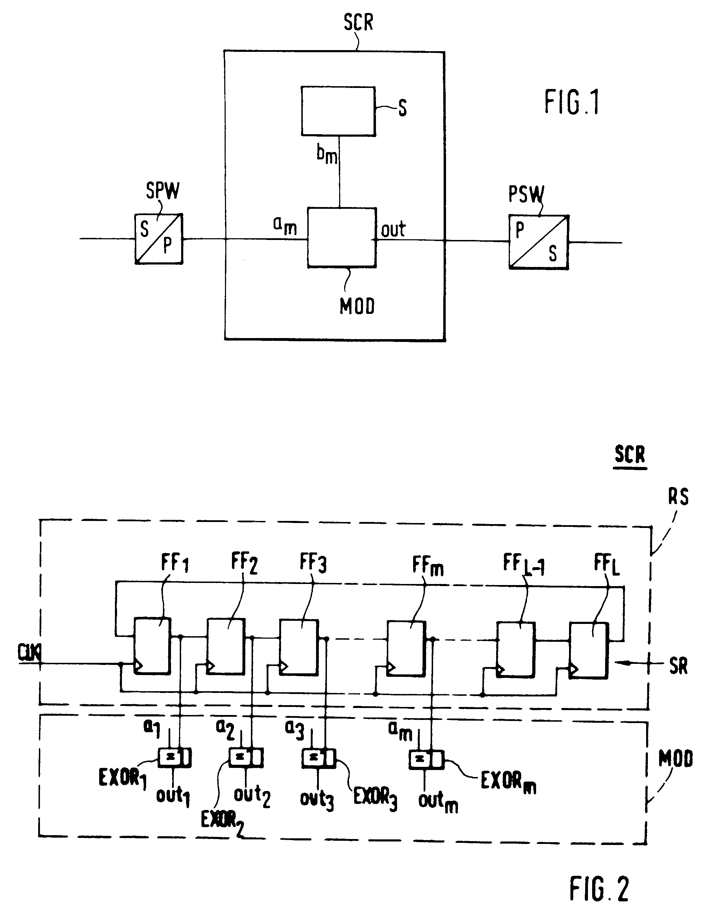

Aus der CCITT-Empfehlung G.709 Ziffer 2.4 und Fig. 2.10 ist ein Scrambler bekannt, der in der Lage ist, zu verscrambelnde Datenströme mit einer Pseudo-Zufallsfolge zu verscrambeln, die nach dem Bildungsgesetz Dᵢ = 1 + D₆ + D₇ generiert wird. Eine solche Pseudo-Zufallsfolge kann nach der CCITT-Empfehlung durch ein in der Fig. 2.10 abgebildetes Schieberegister erzeugt werden. Beim abgebildeten Schieberegister sind die Ausgänge der beiden letzten Speicherzellen in einem exclusiven Oder-Gatter miteinander verknüpft und der Ausgang des exclusiven Oder-Gatters auf den Eingang des ersten Schieberegisters geführt. Dᵢ ist dabei der am Eingang des Schieberegisters anliegende, D₆ der am Ausgang der zweitletzten Speicherzelle und D₇ der am Ausgang der letzten Speicherzelle anliegende binäre Wert.

Gemäß der CCITT-Empfehlung G.709 ist ein zu übertragender serieller Datenstrom nach dem obengenannten Bildungsgesetz zu verscrambeln.

Für Datenströme mit hoher Bitfolgefrequenz ist es nun bekannt, serielle Datenströme in parallele Teilströme zu wandeln und die Teilströme in der Weise durch Modulo-2-Addition zu verknüpfen, daß ein anschließend wieder seriell gewandelter Datenstrom mit der gewünschten Pseudo-Zufallsfolge verscrambelt ist. Die hierzu erforderlichen Pseudo-Zufallsfolgen zur Modulo-2-Addition der Teilströme werden schon seit mehreren Jahrzehnten durch ein zur Erzeugung der gewünschten Pseudo-Zufallsfolgen rückgekoppeltes Schieberegister mit nachgeschaltetem Netzwerk erzeugt. Verbesserungen von parallel arbeitenden Scramblern wurden dabei stets in der Optimierung des nachgeschalteten Netzwerks gesucht.

Aus PROC. IEE, Vol. 111, No. 11, Nov. 1964, Seiten 1803 bis 1806 von S.H. Tsao et al ist bekannt, eine Pseudo-Zufallsfolge mit endlicher Länge in einem rückgekoppelten Schieberegister zu erzeugen. Es wird ein Schieberegister mit geringer Tiefe verwendet, bei dem aus direkt abgegriffenen Pseudo-Zufallsfolgen durch Modulo-2-Addition in einem nachgeschalteten Netzwerk weitere Zufallsfolgen mit einer anderen Phasenlage erzeugt werden. Durch die Anordnung des Netzwerkes können mehr Pseudo-Zufallsfolgen abgegriffen werden als an den Schieberegisterausgängen anliegen. Das Netzwerk besteht aus exclusiven Oder-Gattern, in denen die Modulo-2-Additionen durchgeführt werden. Das Netzwerk ist dahingehend optimiert, daß möglichst wenig Modulo-2-Additionen durchgeführt werden mußten, um eine bestimmte Anzahl von Pseudo-Zufallsfolgen mit unterschiedlicher Phasenlage zu erzeugen, um eine möglichst geringe zeitliche Verzögerung durch die Erzeugung der zusätzlichen Pseudo-Zufallsfolgen im Netzwerk zu erwirken.

Aus einer zehn Jahre später im Siemens Forsch.- und Entwickl.-Ber., Band 3 (1974) Nr. 4, Seiten 218 bis 224, veröffentlichten Schrift wird von dem von S.H. Tsao et al veröffentlichten Grundgedanken mit den Schiebe- und Addiereigenschaften der Pseudo-Zufallsfolgen - wenn zwei zyklisch verschobene Versionen der gleichen Pseudo-Zufallsfolge jeweils mit übereinanderliegenden Bits modulo-2-addiert werden, ergibt sich eine weitere zyklisch verschobene Version der gleichen Pseudo-Zufallsfolge - Gebrauch gemacht. Es wird gezeigt, daß die Anwendung bestimmter Rechenregeln es erlauben, die in den vorliegenden Fällen erforderlichen Verknüpfungen für eine bestimmte vorgegebene Struktur eines Pseudo-Zufallsgenerators auf sehr einfache Weise in allgemeiner Form zu bestimmen. Dabei wurde der Grundgedanke weiterverfolgt, daß durch ein N-stufiges Schieberegister L = 2^{N}-1 gleichartige Pseudo-Zufallsfolgen unterschiedlicher Phasenlage geschaffen werden können.

Aus einer neun Jahre später in Elektronik 26/30.12.1983, Seiten 67 bis 70 veröffentlichten Schrift mit dem Titel "Parallel arbeitender Scrambler, Descrambler und Zufallsfolgengeneratoren" sind aus Teil 1 Scrambler bekannt, bei denen immer noch der Gedanke verfolgt wird, aus einem N-stufigen Schieberegister L = 2^{N}-1 gleichartige, aber zueinander phasenverschobene Pseudo-Zufallsfolgen zu erzeugen.

Hierzu werden besonders geeignete Verknüpfungen für parallel arbeitende multiplikative Scrambler angegeben.

Der Nachteil der bekannten Lösungen liegt nun darin, daß bei in einem Netzwerk in Serie durchzuführenden Modulo-2-Additionen eine minimale Taktperiode erforderlich ist, die die maximale Bitfolgefrequenz beschränkt.

Aus der Zusammenfassung der Japanischen Patentschrift JP 60 217 746 in Patent Abstracts of Japan, vol. 10, no.69 (E-389)(2126) vom 18. März 1986 ist ein paralleler additiver Scrambler zum Verscrambeln eines in m Bit breite Worte parallel gewandelten seriellen Datenstroms bekannt. Der Scrambler enthält eine Vorrichtung zur Modulo-2-Addition (exklusive Oder-Verknüpfung), mittels der der serielle Datenstrom mit einer vorgegebenen Pseudo-Zufallsfolge verscrambelt wird. Die Pseudo-Zufallsfolge ist in einem ROM (read-only-memory), der über m parallele Ausgänge mit der Vorrichtung zur Modulo-2-Addition verbunden ist, gespeichert. Der ROM hat eine Größe (64 Bit), die ein Vielfaches (16 x) der Länge eines Datenwortes ist (4 Bit). Aufeinanderfolgenden Datenworten wird in zyklischer Reihenfolge eine von 16 vorgegebenen Pseudo-Zufallsfolgen aufaddiert.

Aus der Zusammenfassung der Japanischen Patentschrift JP 22 77 329 in Patent Abstracts of Japan, vol. 15, no.40 (E-1028) vom 30. Januar 1991 ist eine Synchronisations-Schaltung für Zufallsfolgen bekannt. Sie enthält einen Pseudo-Zufallsgenerator, der in Abhängigkeit eines Reset-Signales und eines zeitgleichen Torsignales fortwährend neu eine Zufallsfolge erzeugt, die dann einem Schieberegister zugeleitet wird. In Abhängigkeit eines Zählerstandes wird die Zufallsfolge von diesem verschoben um eine Pseudo-Zufallsfolge zu erhalten. Durch Reset- und Torsignal wird eine Koinzidenz zwischen einem Eingangsignal und der Pseudo-Zufallsfolge hergestellt. Die Pseudo-Zufallsfolge wird dann mittels einer exklusiven Oder-Verknüpfung dem gespreizten Eingangssignal aufaddiert.

Der Erfindung liegt die Aufgabe zugrunde, einen parallelen additiven Scrambler/Descrambler für eine hohe Bitfolgefrequenz zu schaffen.

Die Aufgabe wird durch die Merkmale der Ansprüche 1 und 8 gelöst.

Vorteilhafte Ausgestaltungen der Erfindung sind den übrigen Ansprüchen zu entnehmen.

Drei Ausführungsbeispiele der Erfindung sind anhand der Figuren 1 bis 4 beschrieben. Es zeigen:
- Fig. 1: einen als Blockschaltbild dargestellten paralleln additiven Scrambler,
- Fig. 2: ein Beispiel eines Scrambler mit Schieberegister, dessen Tiefe L größer als die Breite m des zu verscrambelnden Wortes ist,
- Fig. 3: ein Ausführungsbeispiel eines Scramblers mit einem Schieberegister, dessen Tiefe L gleich der Breite m des zu verscrambelnden Wortes ist, und
- Fig. 4: ein Ausführungsbeispiel eines Scramblers mit einem Schieberegister für ein zu verscrambelndes Wort, dessen Breite m größer als, aber höchstens doppelt so groß wie die Tiefe L des Schieberegisters ist.

In Fig. 1 ist ein erfindungsgemäßer Scrambler SCR im Blockschaltbild abgebildet. Der Scrambler SCR enthält einen Speicher S, in dem die zum Verscrambeln verwendete Pseudo-Zufallsfolge vollständig abgespeichert ist. Der Speicher S ist mit einer Vorrichtung MOD zur Modulo-2-Addition durch einen m bit breiten Anschluß verbunden. In der Vorrichtung MOD zur Modulo-2-Addition wird nun ein in m bit breite Worte parallel gewandelter Datenstrom verscrambelt. Der parallel gewandelte Datenstrom wird in einem Seriell-Parallel-Wandler SPW aus einem seriellen Datenstrom erzeugt. Nach der Modulo-2-Addition wird der verscrambelte parallel gewandelte Datenstrom in einem als Parallel-Seriell-Wandler SPW verwendeten Multiplexer in einen verscrambelten seriellen Datenstrom umgewandelt. Der Seriell-Parallel-Wandler SPW und der Parall-Seriell-Wandler PSW müssen nicht notwendigerweise Bestandteil des Scrambler SCR sein. Der Scrambler kann auch Bestandteil einer komplexen Schaltungsanordnung sein, in der parallele Datenströme wortweise verarbeitet werden. Wesentlich bei der Erfindung ist, daß der parallelisierte Datenstrom derart modulo-2-addiert wird, daß er nach der Parallel-Seriell-Wandlung mit einer für den seriellen Datenstrom vorgegebenen Pseudo-Zufallsfolge verscrambelt ist.

In Fig. 2 ist ein Ausführungsbeispiel für einen Scrambler SCR abgebildet, der als Speicher S ein L-stufiges, getaktetes, rückgekoppeltes Schieberegister SR aufweist, das mit einer aus m exclusiv Oder-Gattern EXOR₁ bis EXOR_{M} bestehenden Vorrichtung zur Modulo-2-Addition MOD verbunden ist. Das Schieberegister SR besteht aus einer Anzahl L D-Flip-Flops, wobei der Datenausgang des letzten D-Flip-Flops FF_{L} mit dem Dateneingang des ersten D-Flip-Flops FF₁ verbunden ist. Es stellt somit eine Form eines Ringspeichers dar. L ist eine positive ganze Zahl und entspricht der Länge der Pseudo-Zufallsfolge, mit der der serielle Datenstrom zu verscrambeln ist. Die Datenausgänge der D-Flip-Flops FF₁ bis FFₘ sind mit jeweils einem ersten Dateneingang eines der exclusiven Oder-Gatters EXOR₁ bis EXORₘ verbunden. m ist eine positive ganze Zahl und entspricht der Wortbreite des parallel gewandelten Datenstroms, oder anders ausgedrückt entspricht m der Anzahl von Teilströmen, in die der parallel gewandelte serielle Datenstrom aufgeteilt ist. An den jeweils zweiten Eingängen a₁ bis aₘ der exclusiven Oder-Gatter EXOR₁ bis EXORₘ liegen die m Teilströme des parallel gewandelten Datenstromes an und werden dort Wortweise modulo-2-addiert. An den Ausgängen out₁ bis outₘ der exclusiven Oder-Gatter EXOR₁ bis EXORₘ, die zusammen den parallelen Ausgang out der Vorrichtung MOD zur Modulo-2-Addition bilden, liegen die modulo-2-addierten Teilströme an.

Das Ausführungsbeispiel ist für den Fall vorgesehen, daß die Länge L der verwendeten Pseudo-Zufallsfolge größer als die Wortbreite m des parallel gewandelten Datenstromes ist. Im Extremfall kann m und L auch übereinstimmen.

Im Betrieb wird während einer Taktperiode ein Datenwort mit der Breite m mit jeweils einem Bit einer m Bit breiten Pseudo-Zufallsfolge modulo-2-addiert, wobei benachbarte Bits der Datenworte mit jeweils einem um ein Bit phasenverschobenen Bit der Pseudo-Zufallsfolge verknüpft werden. Danach wird die Pseudo-Zufallsfolge im Ringspeicher RS um m bit nach links verschoben und während der nächsten Taktperiode das nachfolgende Datenwort mit den auf die Phasenlage bezogenen m nächsten Bits der Pseudo-Zufallsfolge verknüpft. Dieser Vorgang wiederholt sich kontinuierlich.

Für den Fall, daß die Wortbreite m größer als die halbe Länge L/2 der Pseudo-Zufallsfolge ist, wird die Pseudo-Zufallsfolge im Ringspeicher RS nicht um m bit nach links, sondern um L-m bit nach rechts verschoben, was nach der Verschiebeoperation zum gleichen Ergebnis führt, aber durch eine 2m-L Verschiebeschritte kürzere Verschiebeoperation erreichbar ist.

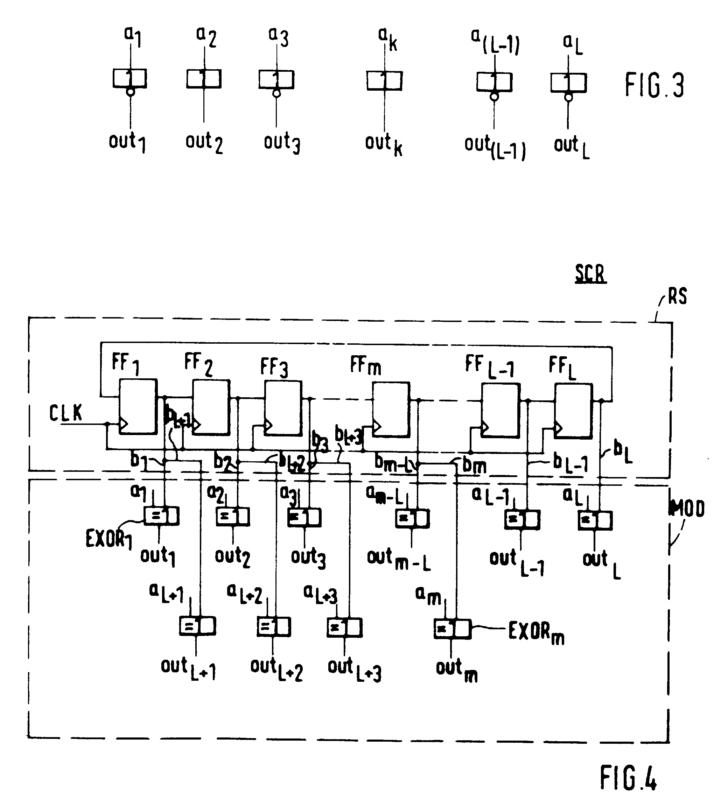

In Fig. 3 ist für den Fall, daß die Wortbreite m und die Länge L der Pseudo-Zufallsfolge übereinstimmen, ein besonders einfaches Ausführungsbeispiel eines Scramblers abgebildet. Da eine Verschiebeoperation der Pseudo-Zufallsfolge um m = L bit zu derselben Phasenlage, wie vor der Durchführung der Verschiebeoperation, führt, kann auf diese Verschiebeoperation verzichtet werden. Diejenigen Teilströme, die bei einer Modulo-2-Addition negiert werden, werden im Ausführungsbeispiel gemäß Fig. 3 in einem Antivalenzgatter AVG negiert, diejenigen, die nicht negiert werden sollen, bleiben in einem Äquivalenzgatter AEG erhalten. Durch die Auswahl und die Anordnung der Antivalenzgatter AVG oder der Äquivalenzgatter AEG für jeweils einen Teilstrom des parallel gewandelten Datenstroms wird die gewünschte Pseudo-Zufallsfolge festgelegt. Die Antivalenzgatter AVG und die Äquivalenzgatter AEG führen die gewünschte Wandlung des Datenstromes durch, so daß die Auswahl und die Anordnung der Antivalenz- und Äquivalenzgatter sowohl die Funktion des Speichers S zum Speichern der Pseudo-Zufallsfolge als auch die Funktion der Vorrichtung MOD zur Modulo-2-Addition erfüllen. Anstelle der Äquivalenzgatter AEG kann auch zum Zwecke des Verscrambelns auf jegliches Gatter verzichtet werden.

In Fig. 4 ist ein Ausführungsbeispiel abgebildet, das von dem aus Fig. 2 ausgeht und für den Fall erweitert ist, daß die Breite m eines zu verscrambelnden Wortes größer als die Länge L der verwendeten Pseudo-Zufallsfolge ist. Das Ausführungsbeispiel bezieht sich konkret auf eine Beziehung der Wortbreiten m und der Länge L der Pseudo-Zufallsfolge L < m < 2L. Der Ringspeicher RS gemäß Fig. 2 weist hierzu, wie in Fig. 4 abgebildet, 2 (m-L) Ausgänge, z.B. b₁, b_{L+1}; b₂, b_{L+2}; b₃, b_{L+3}; b_{m-L}, bₘ auf, an denen paarweise dieselben Bits der Pseudo-Zufallsfolge anliegen, so daß der Ringspeicher RS insgesamt m Ausgänge aufweist, an denen insgesamt die L bit der Pseudo-Zufallsfolge anliegen. Diese m Ausgänge des Ringspeichers RS sind jeweils mit einem Eingang eines der m exclusiv Oder-Gatter EXOR₁ bis EXORₘ verbunden, wobei die exclusiv Oder-Gatter EXOR₁ bis EXORₘ die Vorrichtung zur Modulo-2-Addition darstellen, an den jeweils zweiten Dateneingängen a₁ bis aₘ der exclusiv Oder-Gatter EXOR₁ bis EXORₘ und werden dort, wie auch im Ausführungsbeispiel gemäß Fig. 2, wortweise mit der Pseudo-Zufallsfolge modulo-2-addiert.

Die Funktionsweise stimmt mit der des Ausführungsbeispiels gemäß Fig. 2 grundsätzlich überein, wobei die gespeicherte Pseudo-Zufallsfolge im Ringspeicher RS zwischen aufeinanderfolgenden Modulo-2-Additionen zweier nacheinanderfolgender Datenworte um m-L bit nach links verschoben wird. Für den Fall, daß die Wortbreite m größer als die eineinhalbfache Länge L der Pseudo-Zufallsfolge ist, ist es in Analogie zum Ausführugnsbeispiel gem. Fig. 2 vorteilhaft, die Pseudo-Zufallsfolge um zweimal L-m bit nach rechts zu verschieben.

Für den Fall, daß die Wortbreite m größer als die zweifache Länge der Pseudo-Zufallsfolge, aber kleiner als die dreifache Länge der Pseudo-Zufallsfolge ist, weist in Analogie zum Ausführungsbeispiel gemäß Fig. 4 der Ringspeicher (nicht abgebildet) 3 (m-2L) Ausgänge auf, bei denen an jeweils drei Ausgängen dieselben Bits der Pseudo-Zufallsfolge anliegen. Für noch größere Wortbreiten m im Vergleich zur Länge L der Pseudo-Zufallsfolge ist der Ringspeicher RS in Analogie zu den oben beschriebenen Ausführungsbeispielen zu ergänzen.

Zum Verscrambeln eines STM-16 Signals mit einer Bitfolgefrequenz f = 2,48832 Gbit/s wird in einem weiteren Ausführungsbeispiel ein Scrambler gemäß Fig. 4 verwendet, bei dem die Länge L der Pseudo-Zufallsfolge gemäß CCITT-Empfehlung G. 709 Ziffer 2.4 127 bit beträgt und der parallel gewandelte Datenstrom eine Wortbreite m = 128 bit aufweist. Dabei ist der Datenstrom in 128 Teilströme aufgeteilt, so daß im Scrambler 128 bit breite Datenwörter verarbeitet werden.

Der Ringspeicher RS weist hierzu ein 127-stufiges Schieberegister SR auf, bei dem der Datenausgang des ersten Flip-Flops FF₁ auf zwei Ausgänge des Ringspeichers RS geführt wird. Nach der Modulo-2-Addition eines Datenwortes wird die Pseudo-Zufallsfolge im Ringspeicher RS um 1 bit nach links verschoben. Danach erfolgt die Modulo-2-Addition des nachfolgenden Datenwortes.

Der grundlegende Erfindungsgedanke, ganze Pseudo-Zufallsfolgen abzuspeichern, wie es in den auf Scrambler SCR bezogene Ausführungsbeispiele beschrieben ist, kann auch in gleicher Weise in Descramblern realisiert werden. Den Descramblern wird dabei im Gegensatz zu Scramblern ein verscrambelter Datenstrom zugeführt und in gleicher Weise, wie in den obengenannten Ausführungsbeispielen, verarbeitet, wodurch letztlich ein descrambelter Datenstrom entsteht.

## Patentansprüche

1. Paralleler additiver Scrambler (SCR) zum Verscrambeln eines in m Bit breite Worte parallel gewandelten seriellen Datenstromes, wobei m eine ganze positive Zahl ist, bei dem in einer Vorrichtung (MOD) zur Modulo-2-Addition der parallel gewandelte Datenstrom derart modulo-2-addiert wird, daß der serielle Datenstrom mit einer vorgegebenen, in einem Speicher (S, RS), der über m parallele Ausgänge mit der Vorrichtung zur Modulo-2-Addition verbunden ist, gespeicherten Pseudo-Zufallsfolge verscrambelt wird,
**dadurch gekennzeichnet,** daß
die Pseudo-Zufallsfolge in dem Speicher (S, RS) verschiebbar gespeichert ist und daß eine Vorrichtung zur Verschiebung der gespeicherten Pseudo-Zufallsfolge vorhanden ist.

2. Scrambler nach Anspruch 1, dadurch gekennzeichnet, daß der Speicher (S) ein Ringspeicher (RS) ist.

3. Scrambler nach Anspruch 2, dadurch gekennzeichnet, daß der Ringspeicher (RS) ein rückgekoppeltes Schieberegister (SR) ist.

4. Scrambler nach Anspruch 2 oder 3, dadurch gekennzeichnet, daß die Pseudo-Zufallsfolge aus L bit besteht und der Ringspeicher (RS) L Speicherplätze aufweist, wobei L eine ganze positive Zahl ist.

5. Scrambler nach einem der Ansprüche 2 bis 4, dadurch gekennzeichnet, daß die Pseudo-Zufallsfolge im Ringspeicher (RS) in eine erste Richtung ausgerichtet gespeichert ist, die Wortbreite m des parallelen Datenstroms größer als die halbe Länge L/2 der Pseudo-Zufallsfolge ist oder ein ganzzahliges Mehrfaches der Wortbreite m größer als ein ganzzahliges Mehrfaches der Länge der Pseudo-Zufallsfolge plus mehr als eine halbe Länge L/2 der Pseudo-Zufallsfolge ist, und eine Schaltungsanordnung zum Verschieben der Pseudo-Zufallsfolge in eine zweite, der ersten Richtung entgegengesetzte Richtung vorhanden ist.

6. Scrambler nach einem der Ansprüche 1 bis 4, dadurch gekennzeichnet, daß die Wortbreite m größer als die Länge L der Pseudo-Zufallsfolge ist und an m - L Ausgängen der Speichers (S) jeweils paarweise dieselben Bits einer Pseudo-Zufallsfolge anliegen.

7. Scrambler nach Anspruch 6, dadurch gekennzeichnet, daß die Wortbreite m = 128 bit beträgt und die Pseudo-Zufallsfolge eine Länge L = 127 bit aufweist, das erste und das letzte Bit eines Wortes mit demselben Bit einer Pseudo-Zufallsfolge verscrambelt werden.

8. Paralleler additiver Descrambler zum Descrambeln eines in m Bit breite Worte parallel gewandelten seriellen Datenstromes, wobei m eine ganze positive Zahl ist, bei dem in einer Vorrichtung zur Modulo-2-Addition der parallel gewandelte Datenstrom derart modulo-2-addiert wird, daß der serielle Datenstrom mit einer vorgegebenen, in einem Speicher (S), der über m parallele Ausgänge mit der Vorrichtung zur Modulo-2-Addition verbunden ist, gespeicherten Pseudo-Zufallsfolge verscrambelt wird,
**dadurch gekennzeichnet,** daß
die Pseudo-Zufallsfolge in dem Speicher (S) verschiebbar gespeichert ist und daß eine Vorrichtung zur Verschiebung der gespeicherten Pseudo-Zufallsfolge vorhanden ist.

## Claims

1. Parallel additive scrambler (SCR) for scrambling a serial data stream which has been converted into parallel m-bit words, where m is a positive integer, wherein the data stream which has been converted into parallel form is added modulo-2 in a device (MOD) for modulo-2 addition in such a way that the serial data stream is scrambled with a predetermined pseudo-random sequence which is stored in a memory (S, RS) which is connected to the device for modulo-2 addition via m parallel outputs,
characterised in that
the pseudo-random sequence is relocatably stored in the memory (S, RS) and in that a device is present for the purpose of shifting the stored pseudo-random sequence.

2. Scrambler according to Claim 1, characterised in that the memory (S) is a ring memory (RS).

3. Scrambler according to Claim 2, characterised in that the ring memory (RS) is a feedback shift register (SR).

4. Scrambler according to Claim 2 or 3, characterised in that the pseudo-random sequence consists of L bits and the ring memory (RS) has L memory locations, where L is a positive integer.

5. Scrambler according to any one of claims 2 to 4,
characterised in that the pseudo-random sequence is stored in the ring memory (RS) so as to be aligned in a first direction, the word-length m of the parallel data stream is greater than half the length L/2 of the pseudo-random sequence, or an integral multiple of the word-length m is greater than an integral multiple of the length of the pseudo-random sequence plus more than half the length L/2 of the pseudo-random sequence, and a circuit arrangement is present for the purpose of shifting the pseudo-random sequence in a second direction which is contrary to the first direction.

6. Scrambler according to any one of Claims 1 to 4,
characterised in that the word-length m is greater than the length L of the pseudo-random sequence, and the same bits of a pseudo-random sequence are applied, in pairs in each instance, at m - L outputs of the memory (S).

7. Scrambler according to Claim 6, characterised in that the word-length m amounts to 128 bits and the pseudo-random sequence has a length L of 127 bits and the first bit and the last bit of a word are scrambled with the same bit of a pseudo-random sequence.

8. Parallel additive descrambler for unscrambling a serial data stream which has been converted into parallel m-bit words, where m is a positive integer, wherein the data stream which has been converted into parallel form is added modulo-2 in a device for modulo-2 addition in such a way that the serial data stream is scrambled with a predetermined pseudo-random sequence which is stored in a memory (S) which is connected to the device for modulo-2 addition via m parallel outputs,
characterised in that
the pseudo-random sequence is relocatably stored in the memory (S) and in that a device is present for the purpose of shifting the stored pseudo-random sequence.

## Revendications

1. Brouilleur (SCR) additif parallèle pour brouiller un flux de données série converti en mots parallèles d'une largeur de m binaires, m étant un nombre entier positif, dans lequel, dans un dispositif (MOD) pour l'addition modulo 2, le flux de données converti en parallèle est additionné en modulo 2 de sorte que le flux de données série est brouillé par une séquence pseudo-aléatoire prédéterminée, mémorisée dans une mémoire (S, RS) qui est reliée par m sorties parallèles au dispositif pour l'addition modulo 2, caractérisé en ce que la séquence pseudo-aléatoire est mémorisée dans la mémoire (S, RS) de façon décalable et en ce qu'un dispositif pour le décalage de la séquence pseudo-aléatoire mémorisée existe.

2. Brouilleur selon la revendication 1, caractérisé en ce que la mémoire (S) est une mémoire annulaire (RS).

3. Brouilleur selon la revendication 2, caractérisé en ce que la mémoire annulaire (RS) est un registre à décalage réinjecté (SR).

4. Brouilleur selon la revendication 2 ou 3, caractérisé en ce que la séquence pseudo-aléatoire se compose de L binaires et la mémoire annulaire (RS) présente L emplacements en mémoire, L étant un nombre positif entier.

5. Brouilleur selon l'une quelconque des revendications 2 à 4, caractérisé en ce que la séquence pseudo-aléatoire est mémorisée dans la mémoire annulaire (RS) orientée dans une première direction, la largeur de mot m du flux de données parallèle étant supérieure à la demi-longueur L/2 de la séquence pseudo-aléatoire ou étant un multiple entier de la largeur de mot m est supérieur à un multiple entier de la longueur de la séquence pseudo-aléatoire avec, en plus, plus d'une demi-longueur L/2 de la séquence pseudc-aléatcire, et un mode de couplage existe pour le décalage de la séquence pseudo-aléatoire dans une deuxième direction opposée à la première direction.

6. Brouilleur selon l'une quelconque des revendications 1 à 4, caractérisé en ce que la largeur de mot m est supérieure à la longueur L de la séquence pseudo-aléatoire et les mêmes binaires d'une séquence pseudo-aléatoire apparaissent respectivement par paires à m-L sorties de la mémoire (S).

7. Brouilleur selon la revendication 6, caractérisé en ce que la largeur de mot s'élève à m=128 binaires, et la séquence pseudo-aléatoire présente une longueur de L-127 binaires, le premier et le dernier binaire d'un mot étant brouillés par le même binaire d'une séquence pseudo-aléatoire.

8. Désembrouilleur additif parallèle pour desembrouiller un flux de données série converti en mots parallèles d'une largeur de m binaires, m étant un nombre entier positif, dans lequel, dans un dispositif (MOD) pour l'additicn modulo 2, le flux de données converti en parallèle est additionné en modulo 2 de sorte que le flux de données série est brouillé par une séquence pseudo-aléatoire prédéterminée, mémorisée dans une mémoire (S) qui est reliée par m sorties parallèles au dispositif pour l'addition modulo 2, caractérisé en ce que la séquence pseudo-aléatoire est mémorisée dans la mémoire (S) de façon décalable et en ce qu'un dispositif pour le décalage de la séquence pseudo-aléatoire mémorisée existe.
